# EUROPEAN PATENT SPECIFICATION

(11) **EP 0 430 241 B1**
(45) Date of publication and mention of the grant of the patent: **10.01.1996**
(21) Application number: 90122855.1
(22) Date of filing: 29.11.1990
(51) Int. Cl.: B21B 27/00, B21B 27/02, B32B 15/01, C22C 37/06

(54) **Wear-resistant compound roll**
Verschleissfeste Verbundwalze
Cylindre de laminoir composite bimétallique résistant à l'usure

(30) Priority: 30.11.1989 JP 311419/89
(43) Date of publication of application: 05.06.1991
(73) Proprietor: HITACHI METALS, LTD., Chiyoda-ku, Tokyo (JP)
(72) Inventor: Hattori, Toshiyuki, Kitakyushyu-shi, Fukuoka-ken (JP); Ooshima, Masahiko, Kitakyushyu-shi, Fukuoka-ken (JP); Nawata, Ryosaku, Kitakyushyu-shi, Fukuoka-ken (JP)
(74) Representative: Patentanwälte Beetz - Timpe - Siegfried Schmitt-Fumian - Mayr

(56) References cited:
- EP-A- 0 309 587
- EP-A- 0 322 315
- DE-A- 3 236 268
- US-A- 4 433 032

## Description

### BACKGROUND OF THE INVENTION

The present invention relates to a wear-resistant compound roll for hot or cold rolling.

Widely used as rolls for hot or cold rolling are compound rolls produced by a centrifugal casting method. To show wear resistance and toughness simultaneously, these compound rolls have a structure consisting of an outer layer made of wear-resistant materials and a shaft portion made of gray cast iron or ductile cast iron having large toughness. These compound rolls can be produced by pouring a melt for an outer layer into a centrifugal casting mold rotating at a high speed, thereby forming a hollow outer layer, and then pouring a melt for a shaft portion into the hollow outer layer in the casting mold, thereby metallurgically bonding the shaft portion to the outer layer. In this case, part of an inner portion of the outer layer is remelted by the heat of the melt for the shaft portion, and then resolidified.

In such centrifugally cast compound rolls, the outer layers advantageously contain hard carbides for higher wear resistance. As materials for the outer layers of such rolls, high-chromium cast iron containing a large amount of hard Cr carbides as disclosed by "Iron and Steel Engineer," April 1979, pp.42-49 are widely used.

In order to obtain higher wear resistance than that of the high-chromium cast iron, it may be considered to add a large amount of V, W, Mo, etc. for forming harder carbides than the Cr carbides. However, compound rolls cannot be produced from these materials by a centrifugal casting method for the reasons below.

With respect to V, it forms hard VC carbides extremely important for improving wear resistance, but the VC carbides have relatively small specific gravities, showing a large difference in specific gravity between the melt and the VC carbides. Accordingly, in the process of centrifugal casting, the VC carbides tend to be concentrated on the inner side of the outer layer. This leads to extremely reduced amounts of C and V on the roll surface.

V, W, Mo, etc. forming hard carbides are elements having a tendency of producing white cast iron, and they tend to be dissolved in the cast iron or steel of the shaft portion at the time of bonding the outer layer and the shaft portion. As a result, in a case where the shaft portion is made of cast iron, its graphitization is extremely deteriorated. Thus, the shaft portion becomes brittle, causing breakage in the process of producing the roll or during the rolling operation.

Further, in a case where the shaft portion is made of steel, in which graphite and carbides are not precipitated, the addition of such elements of producing white cast iron does not cause the brittleness of the shaft portion, but the shaft portion has a higher melting point than the outer layer, so that the outer layer is melted when a melt for the shaft portion is poured, producing a finally solidified layer at the boundary between the outer layer and the shaft portion, which is a mixture of the outer layer alloy and the shaft portion alloy. This boundary portion is likely to have casting defects such as voids.

EP 0 309 587 discloses a wear resistant compound roll, the outer layer of which has a composition by weight % of 1.5 - 3.5 % C, 0.3 - 3.0 % Si, 0.3 - 1.5 % Mn, 2 - 7 % Cr, 9 % or less Mo, 20 % or less W, 3 - 15 % V, possibly 5 % or less of at least one of Ni, Co and Nb, and balance substantially Fe, which compound roll is produced by a special casting method, since it is emphasized and explained in the introductory part of EP 0 309 587 that and why such types of compound rolls comprising an outer layer precipitated with particular carbides and an inner layer strongly bonded thereto cannot be produced by a centrifugal casting method.

### OBJECT AND SUMMARY OF THE INVENTION

In view of the above problems, an object of the present invention is to provide a wear-resistant compound roll composed of an outer layer made of a cast iron in which hard carbides of V, Mo, W, etc. are uniformly distributed, and a shaft portion made of cast iron or steel, in which graphite particles are well precipitated, the outer layer and the shaft portion being metallurgically bonded to each other.

In the production of a compound roll containing hard carbides such as VC by a centrifugal casting method, the first problem is the centrifugal separation of VC carbides from the melt due to their difference in specific gravity. As a result of investigation to solve this problem, the segregation of the VC carbides caused by the centrifugal separation can be reduced when the melt has a composition which causes little precipitation of the VC carbides in a primary crystal. Specifically, by providing the melt with a composition of having a composition (by weight %) consisting essentially of 1-4% of C, 3% or less of Si, 1.5% or less of Mn, 4% or less of Ni, 2-15% of Cr, 8% or less of Mo, 20% or less of W, 2-10% of V and balance substantially Fe and inevitable impurities, the value of C (%) + 0.4 V (%) being 6.0 or less, the precipitation of VC carbides in the primary crystal can be substantially suppressed, decreasing the segregation of the VC carbides in a portion near the inner surface of the outer layer. Thus, the outer layer having good wear resistance can be obtained by a centrifugal casting method. The present invention has been made based upon this finding.

Thus, the wear-resistant compound roll according to the present invention comprises an outer layer, a shaft portion and an intermediate layer, produced by a centrifugal casting method, the outer layer and the shaft portion being metallurgically bonded to each other via the intermediate layer, the outer layer being made of an iron-base alloy having a composition (by weight %) consisting of 1-4% of C, 3% or less of Si, 1.5% or less of Mn, 4% or less of Ni, 2-15% of Cr, 8% or less of Mo, 20% or less of W, 2-10% of V, a first optional component of 5% or less of one or more elements selected from Ti, Zr and Nb, a second optional component of 15% or less of Co and balance of Fe and inevitable impurities, the value of C (%) + 0.4 V (%) being 6.0 or less, and said intermediate layer being made of an iron-base alloy having a composition as defined in claim 1. The shaft portion can preferably be made of gray cast iron or ductile cast iron.

### BRIEF DESCRIPTION OF THE DRAWINGS

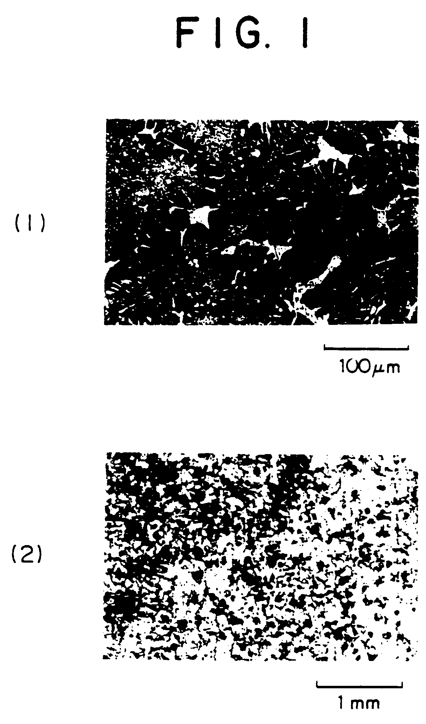

Fig. 1 (1) is a photomicrograph showing the metal structure of the outer layer of the wear-resistant compound roll in Example 3;
Fig. 1 (2) is a photomicrograph showing the metal structure of the shaft portion of the wear-resistant compound roll in Example 3;
Fig. 2 is a graph showing the V distribution in a sleeve roll produced according to the present invention and that in a sleeve roll made of the conventional alloy material;
Fig. 3 is a graph showing wear profiles of rolls of the present invention and Comparative Example detected by the roll wear test apparatus;
Fig. 4 is a photomicrograph showing the metal structure of the shaft portion of the wear-resistant compound roll in Example 5;
Fig. 5 is a schematic view showing a rolling wear test apparatus for conducting a wear test; and
Fig. 6 is a schematic cross-sectional view showing the compound roll in Example 5.

### DETAILED DESCRIPTION OF THE INVENTION

In the wear-resistant compound roll according to the present invention, the reasons for limiting the amounts (weight %) of components in the outer layer are as follows:
(a) C: 1-4 %
   C is an indispensable element for forming carbides to increase the wear resistance of the roll. If it is less than 1%, the amount of carbides precipitated is insufficient, resulting in insufficient wear resistance. On the other hand, when C exceeds 4%, the amount of VC carbides precipitated in a primary crystal is excessive, resulting in the alloy structure in which VC carbides are extremely segregated. The preferred amount of C is 1-3%.
(b) Si: 3% or less
   Si is a necessary element as a deoxidizer. When it exceeds 3%, the resulting cast iron becomes too brittle. The preferred amount of Si is 0.2-2%.
(c) Mn: 1.5% or less
   Mn has a function of deoxidization and of trapping S, which is an impurity, as MnS. However, when it exceeds 1.5%, the alloy becomes brittle. The preferred amount of Mn is 0.2-1%.
(d) Ni: 4% or less
   Ni has a function to improve the hardenability of the alloy by stabilizing an austenite phase. Accordingly, it is effective particularly when a large compound roll is produced. It can be added in an amount up to 4%. However, when exceeding this amount, the retained austenite cannot be easily decomposed, resulting in insufficient hardness and wear resistance. The preferred amount of Ni is 1.5% or less.
(e) Cr: 2-15%
   Cr serves to increase the hardenability of the alloy and generate hard M₇C₃ carbides. When it is less than 2%, the hardenability of the alloy becomes insufficient, and when it exceeds 15%, the amount of hard VC carbides becomes too small. The preferred amount of Cr is 3-12%.
(f) Mo: 8% or less
   Mo is necessary for obtaining good hardenability and tempering hardness, but when it exceeds 8%, the amount of M₂C or M₆C carbides increases, thereby undesirably decreasing the amount of harder VC carbides. The preferred amount of Mo is 0.5-6%.
(g) W: 20% or less
   W has a function of improving tempering hardness, and it is dissolved in VC carbides to increase their specific gravity, thereby decreasing their gravity segregation. However, when it exceeds 20%, the amount of W₆C carbides increases, undesirably decreasing the amount of harder VC carbides. The preferred amount of W is 0.5-10%.
(h) V: 2-10%
   V is an indispensable element for forming hard carbides which are effective for increasing wear resistance. When it is less than 2%, sufficient effects cannot be obtained, and when it exceeds 10%, granular VC carbides are excessively precipitated in a primary crystal, so that the VC carbides having a relatively small specific gravity tend to be segregated in a portion near the inner surface of the outer layer. Accordingly, amount of V should be limited to 10% or less. The preferred amount of V is 3-8%.
   The amount of V is mainly restricted by the amount of C. The inventors have found through various experiments a composition range in which the VC carbides are less precipitated in the primary crystal, causing the segregation of the VC carbides in the centrifugal casting process. Specifically, when C (%) + 0.4 V (%), by weight, is 6.0 or less, the precipitation of the VC carbides in the primary crystal is sufficiently small. Accordingly, with this composition range, the outer layer produced by a centrifugal casting method suffers from little segregation of V and C into a portion near the inner surface of the outer layer, thereby providing the outer layer with a sufficiently uniform composition. The preferred range of C (%) + 0.4V (%) is 2-5.
(i) Other additive elements
   In addition to the above elements, the iron-base alloy for the outer layer according to the present invention may further contain Ti, Zr or Nb alone or in combination. Ti, Zr and Nb are, like V, elements for forming hard carbides. By introducing these elements into the outer layer of the roll, the wear resistance of the roll can be increased. The amount of one or more elements selected from Ti, Zr and Nb is 5% or less in total. When the total amount of these elements exceeds 5% the amount of VC carbides becomes too small.

In the present invention, Co may be added to the outer layer. Co is dissolved in the matrix of the outer layer, increasing the high-temperature strength of the roll. Accordingly, the addition of Co is effective to improve the wear resistance and resistance to surface roughening of the compound roll for hot rolling. This effect is sufficient when up to 15% of Co is added. However, even though the Co content exceeds 15%, further improvement of wear resistance and resistance to surface roughening cannot be obtained. Accordingly, the upper limit of the Co content is 15% from the economic point of view.

Beside the above elements, the iron-base alloy for the outer layer consists substantially of iron except for inevitable impurities. Major impurities are P and S, and it is desired that P is 0.1% or less and S is 0.08% or less for preventing the alloy from becoming brittle.

Used in combination with the outer layer of the above composition to produce the compound roll is a shaft portion made of gray cast iron, ductile cast iron, graphitic cast steel, etc., in which graphite is precipitated. In this case, the problem is that the shaft portion becomes brittle due to the fact that elements of producing white cast iron such as V, W, Mo, etc. are dissolved into the shaft portion at the time of bonding the shaft portion to the outer layer in the centrifugal casting process. The inventors have found that this problem can be solved by the following means.

First, by properly selecting the time interval from the casting of the outer layer to the casting of the shaft portion, the casting temperature of the shaft portion, the components of the shaft portion, treatment conditions of the melt, etc., the melting of the inner surface of the outer layer at the time of bonding the shaft portion to the outer layer can be suppressed, thereby sufficiently reducing the amounts of the white casting iron-producing elements dissolved into the shaft portion.

The above means should be conducted under strictly controlled conditions and it takes a lot of time to determine the conditions when the components and sizes are different, but the dissolving of the white cast iron-producing elements into the shaft portion can be reduced relatively easily by forming an intermediate layer made of cast steel containing 2.5 weight % or less of C after casting the outer layer and before pouring gray cast iron, ductile cast iron, graphitic cast steel, etc. for the shaft portion. The intermediate layer consists essentially of (by weight) 1-2.5% or less of C, 3% or less of Si, 1.5% or less of Mn, 1% or less of Ni, 3% or less of Cr, 1.5% or less of Mo, 2.5% or less of W, 2% or less of V and balance Fe and inevitable impurities.

Further, in the production of the compound roll consisting of the above outer layer and the above shaft portion, if the shaft portion is made of cast steel, there is no problem that the shaft portion becomes brittle. However, casting defects are likely to be generated in a boundary between the outer layer and the shaft portion. As a result of investigation on this problem, the casting defects in the boundary can be prevented even when the shaft portion is made of steel, by properly selecting the time interval between the casting of the outer layer and the casting of the shaft portion, the casting temperature of the shaft portion, the components of the shaft portion, treatment conditions of the melt, etc., and further the shape of the casting mold and the cooling of the casting mold.

The present invention will be explained in further detail by means of the following Examples.

### Example 1

Each of melts for outer layers having the compositions shown in Table 1 was poured into a CO₂ sand mold having a diameter of 70 mm and a height of 80 mm to cast a small roll having an outer diameter of 60 mm, an inner diameter of 35 mm and a length of 40 mm for rolling wear test. This roll was subjected to a heat treatment comprising hardening from 1000-1100°C and tempering at 500-550°C to provide a test roll.

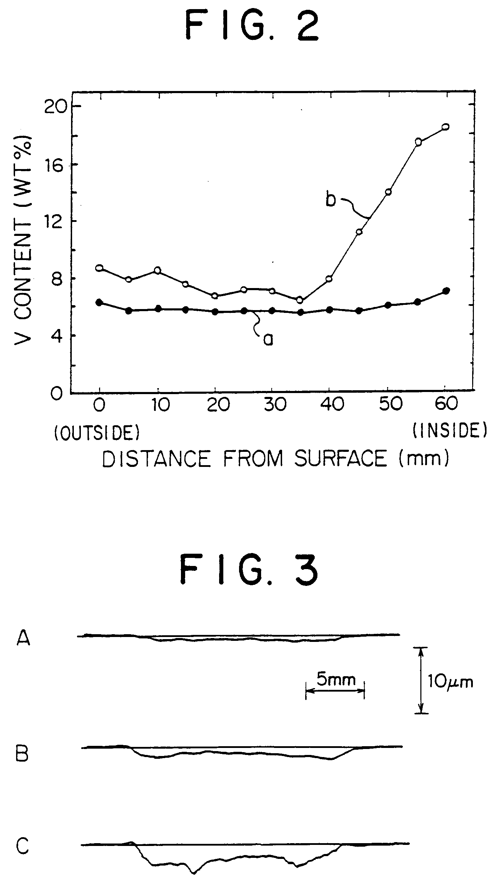

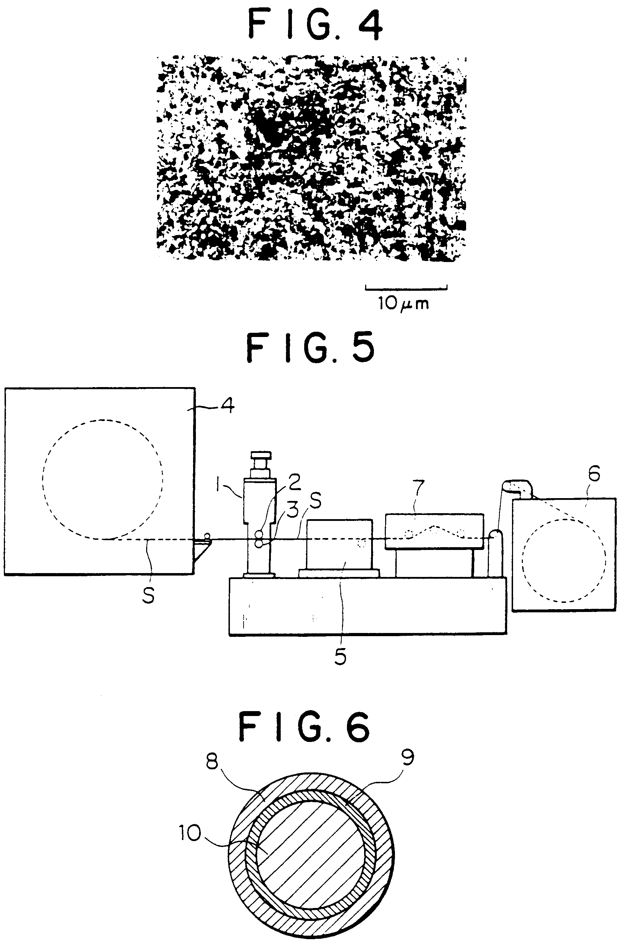

The surface hardness of each test roll was measured by a Shore hardness tester, and the results are shown in Table 2. Next, this test roll was subjected to a rolling wear test. A rolling wear test machine used is as shown in Fig. 5, comprising a rolling mill 1, an upper roll 2 and a lower roll 3 in the rolling mill 1, a heating furnace 4 for preheating a sheet S to be rolled, a cooling water bath 5 for cooling the rolled sheet S, a reel 6 for winding the roll S while giving a constant tension to the sheet S during rolling operation, and a tension controller 7 for adjusting the tension. The test conditions were as follows:
Sheet S to be rolled: SUS 304, 1 mm thick and 15 mm wide
Rolling distance: 800 m
Rolling temperature: 900°C
Rolling reduction: 25%
Rolling speed: 150 m/minute
Roll cooling: Water cooling
Wear depth on the surface of the test roll was measured by a needle contact-type surface roughness tester (SURFCOM). The results are shown in Fig. 3 (A) for sample No. 1. And for each roll the wear depth was averaged in a rolling width to obtain an average wear depth. The results are shown in Table 2.

### Comparative Examples 1, 2

Example 1 was repeated to produce a test roll by using, as conventional materials, high-chromium cast iron (Comparative Example 1) and grain roll alloy material (Comparative Example 2). However, it should be noted that with respect to the heat treatment, appropriate conditions were selected for these materials. As in Example 1, a wear test was conducted and the measured values of wear depth are shown in Figs. 3 (B) (Comparative Example 1) and (C) (Comparative Example 2). And the measured hardness is also shown in Table 2.

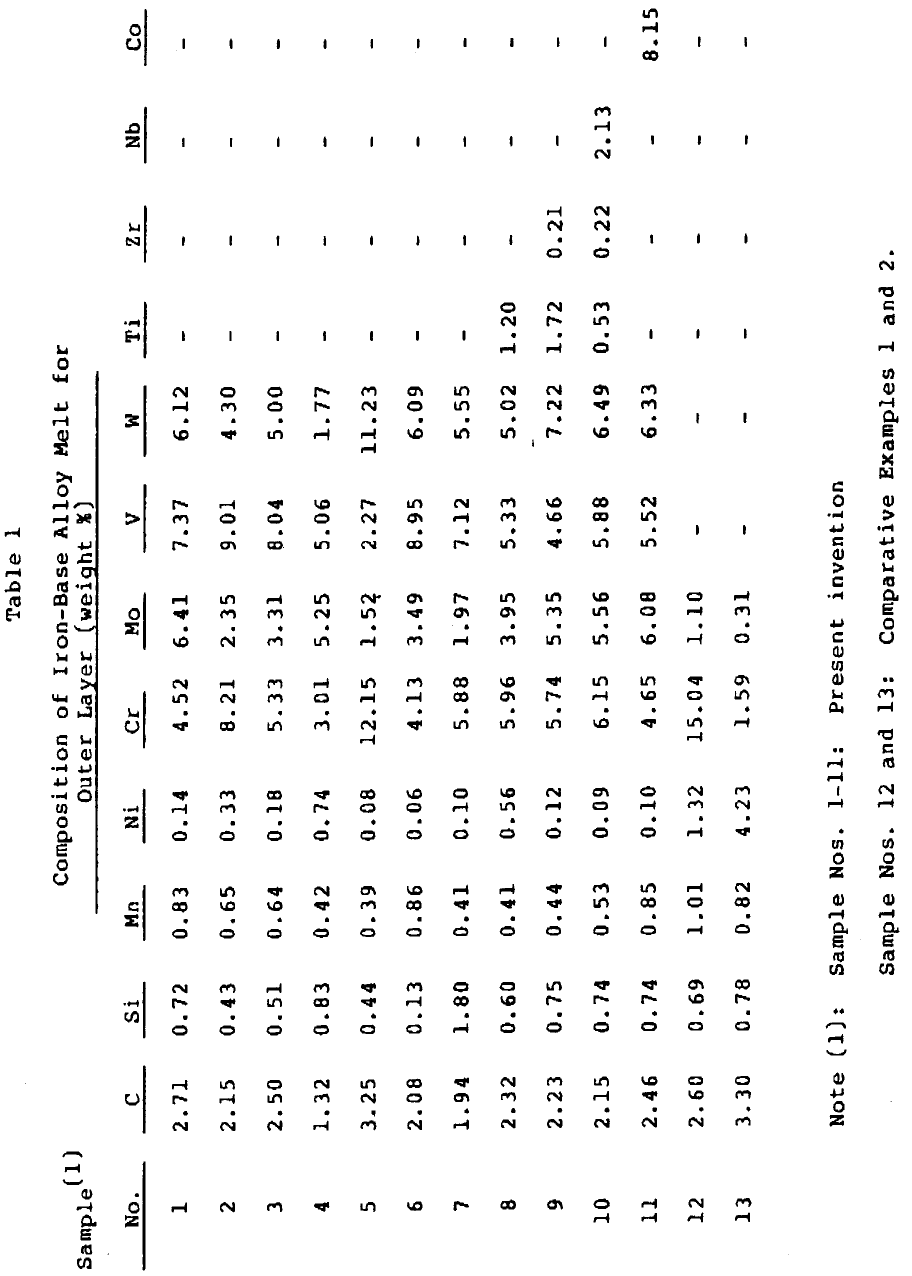

**Table 2**

| Sample⁽¹⁾ No. | Hardness (HS) | Average Wear Depth (µm) |
|---|---|---|
| 1 | 85 | 0.6 |
| 2 | 83 | 0.7 |
| 3 | 83 | 0.6 |
| 4 | 80 | 0.9 |
| 5 | 85 | 0.5 |
| 6 | 82 | 0.6 |
| 7 | 80 | 0.8 |
| 8 | 83 | 0.7 |
| 9 | 82 | 0.8 |
| 10 | 82 | 0.7 |
| 11 | 84 | 0.7 |
| 12 | 75 | 1.5 |
| 13 | 78 | 2.3 |

| | | |
|---|---|---|
| Note (1): Sample Nos. 1-11: Present invention. Sample Nos. 12 and 13: Comparative Examples 1 and 2. | | |

### Example 2

Each of melts ((a): present invention, (b): conventional material) for outer layers having the compositions shown in Table 3 was poured into a mold having a cavity diameter of 450 mm and a cavity length of 750 mm to cast a sleeve roll having a thickness of 60 mm. The rpm of the mold was set such that a centrifugal force on the inner surface of the sleeve roll was 140 G.

**Table 3**

| Component (wt. %) | Present Invention (a) | Conventional Material (b) |
|---|---|---|
| C | 2.05 | 2.67 |
| Si | 0.75 | 0.72 |
| Mn | 0.42 | 0.43 |
| P | 0.031 | 0.033 |
| S | 0.015 | 0.015 |
| Ni | 0.33 | 0.29 |
| Cr | 6.11 | 6.08 |
| Mo | 2.07 | 2.08 |
| V | 6.26 | 11.05 |
| W | 3.98 | 4.15 |

The distribution of V content from the outside to the inside of each as-cast sleeve roll, which is a measure of the VC content, is shown in Fig. 2.

In the sleeve roll made of the cast iron of the present invention (a), little segregation of VC carbides toward the inside of the sleeve roll was observed. On the other hand, the sleeve roll made of the conventional material (b) suffers from large segregation, meaning that the V content is extremely large on the inside of the sleeve roll.

### Example 3

A compound roll composed of an outer layer and a shaft portion each having the composition shown in Table 4 and having a roll diameter of 450 mm and a roll length of 750 mm was produced by the following procedure.

**Table 4**

| Component (wt. %) | Outer Layer | Shaft Portion |
|---|---|---|
| C | 2.03 | 3.44 |
| Si | 0.78 | 2.55 |
| Mn | 0.42 | 0.32 |
| P | 0.028 | 0.030 |
| S | 0.015 | 0.012 |
| Ni | 0.21 | 1.35 |
| Cr | 6.03 | 0.10 |
| Mo | 2.12 | 0.02 |
| V | 6.25 | - |
| W | 4.24 | - |
| Mg | - | 0.048 |

First, a melt for the outer layer was dissolved in a high-frequency furnace, and 450 kg of the melt was poured into a rotating centrifugal casting mold at 1450°C. At this time, a flux for preventing the oxidation of the inner surface of the outer layer was introduced simultaneously. 15 minutes after casting the outer layer, the casting mold was stopped and erected vertically, and ductile cast iron for the shaft portion was immediately poured at 1400°C. After cooling to room temperature, the casting mold was disassembled, and the resulting compound roll was roughly worked. It was then hardened by leaving it to cool from 1000°C, and then it was subjected to a tempering treatment 3 times at 550°C. After the heat treatment, it was confirmed by ultrasonic testing and color check that the compound roll had no defects.

The metal structures of the outer layer and the shaft portion of the compound roll were investigated by electrophotomicrography. Their photomicrographs are shown in Figs. 1 (1) and (2).

Next, a tensile test was conducted on the shaft portion in the longitudinal center portion of the compound roll. Near the boundary between the outer layer and the shaft portion, the shaft portion had a tensile strength of 464 N/mm² (47.3 kg/mm²) and an elongation of 0.41 %, and in its center, it had a tensile strength of 432.6 N/mm² (44.1 kg/mm²) and an elongation of 0.36 %. These values are satisfactory for the practical purpose.

### Example 4

The production of a compound roll having a roll diameter of 450 mm and a roll length of 500 mm and having a shaft portion made of steel will be shown below. The components of melts for an outer layer, and the shaft portion are shown in Table 5.

**Table 5**

| Component (wt. %) | Outer Layer | Shaft Portion |
|---|---|---|
| C | 2.15 | 0.51 |
| Si | 0.65 | 0.35 |
| Mn | 0.81 | 0.70 |
| P | 0.028 | 0.025 |
| S | 0.019 | 0.026 |
| Ni | 0.15 | 0.11 |
| Cr | 6.43 | 1.01 |
| Mo | 3.11 | 0.18 |
| V | 6.60 | - |
| W | 5.01 | - |

### Casting Conditions

290 kg of a melt for the outer layer was poured at 1420°C into a rotating centrifugal casting mold (first mold) inclined by 20°, and a flux for preventing the oxidation of an inner surface of the outer layer was introduced immediately. After the solidification of the outer layer, the rotation of the casting mold was stopped immediately, and the casting mold was erected and placed on a vertical casting mold (second mold) for casting a roll journal portion. Another mold (third mold) for casting a roll journal portion was placed on a top of the first mold, and a melt for a shaft portion at 1250°C was poured into the assembled casting mold. Incidentally, the lower casting mold (second mold) had a thickness of 150 mm or more, and the upper casting mold (third mold) was a sand mold provided with a temperature-keeping layer, thereby conducting the directional solidification of the shaft portion from the lower portion to the upper portion.

The roll thus cast had small cracks in the neck portion of the upper journal, but these defects could be removed by usual cutting. After cutting the outer layer of this roll, ultrasonic testing was conducted. As a result, it was confirmed that there were no defects which may cause practical problems in the boundary between the outer layer and the shaft portion, and that the shaft portion was practically satisfactory even though it had small casting voids in its center portion.

Tensile test samples were machined from a longitudinal center portion of this roll to conduct a tensile test. As a result, the shaft portion near the boundary had a tensile strength of 488.5 N/mm² (49.8 kg/mm²) and an elongation of 0.43 %, and the shaft portion in the center had a tensile strength of 437.5 N/mm² (44.6 kg/mm²) and an elongation of 0.38 %. These values are practically satisfactory.

### Example 5

The production of a compound roll having a three-layer structure as schematically shown in Fig. 6, which has a roll diameter of 450 mm and a roll length of 750 mm, will be shown below. In Fig. 6, 8 denotes an outer layer, 9 denotes an intermediate layer, and 10 denotes a shaft portion. Each layer of this roll has a composition shown in Table 6.

**Table 6**

| Component (wt. %) | Outer Layer | Intermediate Layer | Shaft Portion |
|---|---|---|---|
| C | 2.21 | 1.73 | 3.35 |
| Si | 0.62 | 1.00 | 2.55 |
| Mn | 0.83 | 0.81 | 0.40 |
| P | 0.031 | 0.033 | 0.041 |
| S | 0.021 | 0.022 | 0.006 |
| Ni | 0.12 | 0.75 | 1.4 |
| Cr | 6.51 | 0.08 | 0.11 |
| Mo | 3.02 | 0.03 | 0.030 |
| V | 6.51 | - | - |
| W | 4.82 | - | - |
| Mg | - | - | 0.050 |

4200 kg of a melt for the outer layer 8 was poured at 1420°C into a rotating centrifugal casting mold (first mold) inclined by 20°, and a flux for preventing the oxidation of an inner surface of the outer layer 8 was introduced immediately. After the solidification of the outer layer 8, 150 kg of a melt for the intermediate layer 9 at 1480°C was poured. Immediately after the intermediate layer 9 was completely solidified, a melt for the shaft portion 10 at 1400°C was poured to fill the mold.

After disassembling the mold, the resulting compound roll was worked in its outer surface to conduct an ultrasonic testing. No defects were observed in boundaries between the outer layer 8 and the intermediate layer 9 and between the intermediate layer 9 and the shaft portion 10, verifying that the resulting compound roll was satisfactory.

Fig. 4 is an electrophotomicrograph of the metal structure of the shaft portion 10. The shaft portion 10 had good graphitization, meaning the desired metal structure.

According to the present invention, the compound roll having a wear resistance two to five times as high as that of the conventionally cast alloy rolls can be produced. Such high wear resistance leads to the increase of the service life of the compound roll, the reduction of roll exchange frequency, the improvement of the shapes of rolled articles, and the increase in flexibility of rolling schedule, etc.

On the other hand, although there is proposed a powder metallurgy method for producing high-wear resistance rolls, such a method needs an extremely complicated procedure. Further, the bonding of the outer layer to the shaft portion is difficult, necessitating the assembling thereof. Accordingly, a compound roll produced by such a method is not suitable for rolling thin plates. And when it is applied to rolls for rolling shaped steel, the number of caliber is restricted. The compound roll of the present invention does not suffer from these problems.

## Claims

1. A wear-resistant compound roll comprising an outer layer (8), a shaft portion (10) and an intermediate layer (9), produced by a centrifugal casting method, said outer layer (8) and said shaft portion (10) being metallurgically bonded to each other via the intermediate layer (9), said outer layer being made of an iron-base alloy having a composition (by weight-%) consisting of 1-4 % of C, 3 % or less of Si, 1,5 % or less of Mn, 4 % or less of Ni, 2-15 % of Cr, 8 % or less of Mo, 20 % or less of W, 2-10 % of V, a first optional component of 5 % or less of one or more elements selected from Ti, Zr and Nb, a second optional component of 15 % or less of Co and balance of Fe and inevitable impurities, the value of C (%) + 0.4 V (%) being 6.0 or less, and said intermediate layer being made of an iron-base alloy having a composition (by weight-%) consisting of 1-2.5 % of C, 3 % or less of Si, 1.5 % or less of Mn, 1 % or less of Ni, 3 % or less of Cr, 1.5 % or less of Mo, 2.5 % or less of W, 2 % or less of V and balance of Fe and inevitable impurities.

2. The wear-resistant compound roll according to claim 1, wherein said shaft portion (10) is made of gray cast iron.

3. The wear-resistant compound roll according to claim 1, wherein said shaft portion (10) is made of ductile cast iron.

## Patentansprüche

1. Verschleißfeste Verbundwalze mit einer äußeren Schicht (8), einem Schaftteil (10) und einer Zwischenschicht (9), die durch ein Zentrifugalgießverfahren erzeugt wurde, wobei die äußere Schicht (8) und der Schaftteil (10) untereinander über die Zwischenschicht (9) metallurgisch verbunden wurden, welche äußere Schicht aus einer Eisenbasislegierung mit einer (Gew.-%-) Zusammensetzung aus 1-4 % C, 3 % oder weniger Si, 1,5 % oder weniger Mn, 4 % oder weniger Ni, 2-15 % Cr, 8 % oder weniger Mo, 20 % oder weniger W, 2-10 % V, einem ersten fakultativen Bestandteil von 5 % oder weniger eines oder mehrerer unter Ti, Zr und Nb gewählten Elemente, einem zweiten fakultativen Bestandteil von 15 % oder weniger Co und Rest Fe sowie unvermeidlichen Verunreinigungen besteht, wobei der Wert von C (%) + 0,4 V (%) 6,0 oder weniger ist, und welche Zwischenschicht aus einer Eisenbasislegierung mit einer (Gew.-%-) Zusammensetzung aus 1-2,5 % C, 3 % oder weniger Si, 1,5 % oder weniger Mn, 1 % oder weniger Ni, 3 % oder weniger Cr, 1,5 % oder weniger Mo, 2,5 % oder weniger W, 2 % oder weniger V und Rest Fe sowie unvermeidlichen Verunreinigungen besteht.

2. Verschleißfeste Verbundwalze nach Anspruch 1, wobei der Schaftteil (10) aus grauem Gußeisen besteht.

3. Verschleißfeste Verbundwalze nach Anspruch 1, wobei der Schaftteil (10) aus duktilem Gußeisen besteht.

## Revendications

1. Cylindre de laminoir composite résistant à l'usure comprenant une couche extérieure (8), une partie (10) formant arbre et une couche intermédiaire (9), fabriqué par un procédé de coulée centrifuge, la dite couche externe (8) et la dite partie formant arbre (10) étant liées métallurgiquement l'une à l'autre au moyen de la couche intermédiaire (9), la dite couche externe étant faite d'un alliage à base de fer ayant une composition (en % en poids) consistant de :
- 1 à 4 % de C,
- 3 % ou moins de Si,
- 1,5 ou moins de Mn,
- 4 % ou moins de Ni,
- 2 à 15 % de Cr,
- 8 % ou moins de Mo,
- 20 % ou moins de W,
- 2 à 10 % de V,
- un premier composant optionnel de 5 % ou moins d'un ou plusieurs éléments choisis parmi Ti, Zr et Nb,
- un second composant optionnel de 15 % ou moins de Co,
et le reste du Fe et des impuretés inévitables, la valeur de C (%) + 0,4 V (%) étant de 6,0 ou moins, et la dite couche intermédiaire étant faite d'un alliage à base de fer ayant une composition (en % en poids) consistant de :
- 1 à 2,5 % de C,
- 3 % ou moins de Si,
- 1,5 % ou moins de Mn,
- 1 % ou moins de Ni,
- 3 % ou moins de Cr,
- 1,5 % ou moins de Mo,
- 2,5 % ou moins de W,
- 2 % ou moins de V,
le reste étant du Fe et des impuretés inévitables.

2. Cylindre composite résistant à l'usure selon la revendication 1, dans lequel la dite partie formant arbre (10) est faite de fonte grise.

3. Cylindre composite résistant à l'usure selon la revendication 1, dans lequel la dite partie formant arbre (10) est faite de fonte ductile.
